# EUROPEAN PATENT SPECIFICATION

(11) **EP 3 426 498 B1**
(45) Date of publication and mention of the grant of the patent: **25.10.2023**
(21) Application number: 17700755.6
(22) Date of filing: 03.01.2017
(51) Int. Cl.: B60B 1/04, B60B 9/26, B60C 7/10, B29D 30/02

(54) **NON-PNEUMATIC WHEEL AND METHOD OF CONSTRUCTION**
LUFTLOSES RAD UND VERFAHREN ZUR KONSTRUKTION
ROUE SANS AIR ET PROCÉDÉ DE CONSTRUCTION

(30) Priority: 31.12.2015 WO PCT/US2015/068299
(43) Date of publication of application: 16.01.2019
(73) Proprietor: Compagnie Générale des Etablissements Michelin, 63000 Clermont-Ferrand (FR)
(72) Inventor: DELFINO, Antonio, Greenville, SC 29605 (US); BERGUERAND, Philippe, Greenville, SC 29605 (US); SCHROETER, Pascal, Greenville, SC 29605 (US); BLANC, Maeick, Greenville, SC 29605 (US); RHYNE, Timothy, Brett, Greenville, SC 29605 (US); CRON, Steven, M., Greenville, SC 29605 (US)
(74) Representative: Casalonga
(86) International application number: PCT/US2017/012045
(87) International publication number: WO 2017/117605

(56) References cited:
- EP-A1- 1 980 420
- WO-A1-2010/012091
- WO-A1-2015/058181
- JP-A- 2015 039 987
- US-A- 1 249 273
- US-A1- 2011 272 254
- US-B1- 6 286 572

## Description

### FIELD OF THE DISCLOSURE

The subject matter relates to non-pneumatic wheels and methods of constructing such.

### BACKGROUND

Document JP 2015 039987 A relates to a non-pneumatic tire with asupport structure and a plurality of connection parts. US 2011/0272254 A1 relates to a wheel with wheel segments. The details and benefits of non-pneumatic wheels are described e.g., in U.S. Pat. Nos. 6,769,465; 6,994,134; 7,013,939; and 7,201,194. Some non-pneumatic tire constructions incorporate a shear band, embodiments of which are described in e.g., U.S. Pat. Nos. 6,769,465 and 7,201,194. Such non-pneumatic tires provide advantages in tire performance without relying upon a gas inflation pressure for support of the loads applied to the tire.

In one example of a non-pneumatic wheel, a compliant band with a ground contacting portion can be connected with a plurality of tension-transmitting, web-like elements (also referred to as "spokes") extending radially from a center element or hub. By way of example, such non-pneumatic wheel may be formed by open cast molding in which a material such as e.g., polyurethane is poured into a mold that forms all or part of the non-pneumatic tire. One or more reinforcement structures such as cords may be molded in place in the compliant band.

Typically, in such prior constructions, the spokes and the hub are molded as an integral, single-piece construction. Alternatively, the spokes may be integrally joined by a band that is then bonded with a hub or wheel center. In either construction, the spokes are not readily removable from either the radially-outer end attached with the compliant band or the radially inner end attached to the hub or wheel center.

Because of e.g., the integral construction, prior non-pneumatic wheel constructions are not readily amenable to substituting different spokes into the non-pneumatic wheel. Such a substitution would require destructive steps to cut or extricate both ends of the spoke from the wheel. Additionally, because the spokes are joined or attached with the wheel hub, the substitution of different wheels hubs of different materials or configuration is not readily feasible. Prior manufacturing methods have not been conducive to incorporating reinforcements, shapes, layers of material, and other features into the construction of the spoke.

Accordingly, a method of constructing a tire incorporating spokes for a non-pneumatic wheel that can be more readily molded with reinforcements, various shapes, one or more layers of material, and other features would be useful. A wheel hub incorporating such a spoke into a non-pneumatic wheel without integral construction with the hub would also be beneficial. A hub that can be more readily connected and disconnected from the wheel spoke, the compliant band, or both, would also be useful.

### SUMMARY

Aspects and advantages will be set forth in part in the following description, or may be obvious from the description, or may be learned through practice of the embodiments.

Disclosed herein is a first exemplary method of constructing non-pneumatic wheel which includes: securing a plurality of spokes around the outer circumference of hub; positioning at least one spoke support at the radially outer end of each spoke, the at least one spoke support holding the radially outer end of each spoke in a radially outward position; applying a bonding layer to the radially outer surface of each spoke; placing an outer annular band concentrically over the bonding layer; expanding the at least one spoke support radially outward so that the outer surface of the bonding layer contacts, and attaches with, the inner surface of the outer annular band; contracting the at least one spoke support radially inward; and separating the fingers from the non-pneumatic wheel.

A second exemplary method of constructing non-pneumatic wheel having the characteristics of the first exemplary method wherein the bonding layer outer surface is attached by curing the bonding layer to the outer annular band by the application of pressure and heat.

A third exemplary method of constructing non-pneumatic wheel having the characteristics of the first exemplary method wherein the outer bonding layer is an adhesive which bonds the radially outer surface of each spoke to the outer annular band.

A fourth exemplary method of constructing non-pneumatic wheel having the characteristics of any one of the above exemplary methods wherein the plurality of spokes are secured to the hub by a mechanical connection

A fifth exemplary method of constructing non-pneumatic wheel having the characteristics of any one of the above exemplary methods wherein the plurality of spokes are secured to the hub by at least one retainer, wherein each retainer comprises a first retaining surface and a second retaining surface and the radially outer portion of the first retaining surface and the second retaining surface possesses a flared edge such that the radially outer portion of the first retaining surface curves away from the radially outer portion of the second retaining surface.

A sixth exemplary method of constructing non-pneumatic wheel having the characteristics of any one of the above exemplary methods wherein each spoke support is a finger-like projection.

A seventh exemplary method of constructing non-pneumatic wheel having the characteristics of any one of the above exemplary methods wherein each of the at least one spoke supports are positioned between adjacent spokes.

An eight exemplary method of constructing non-pneumatic wheel that includes: securing a plurality of spokes around the outer circumference of hub, each spoke secured by at least one retainer, wherein each retainer comprises a first retaining surface and a second retaining surface and the radially outer portion of the first retaining surface and the second retaining surface possesses a flared edge such that the radially outer portion of the first retaining surface curves away from the radially outer portion of the second retaining surface; positioning at least one finger at the radially outer end of each spoke, at least one finger on either side of each spoke, the adjacent pair of fingers supporting each spoke in a radially outward position; building the outer annular band upon the radially outer surface of each spoke of the spoke substructure; placing the outer annular band and spoke substructure into a mold; curing the outer annular band.

A ninth exemplary method of constructing non-pneumatic wheel having the characteristics of the fourth exemplary method wherein each plurality of fingers are able to translate in a radial direction to radially expand and contract the radial outer surface of the plurality of spokes.

A tenth exemplary method of constructing non-pneumatic wheel having the characteristics of the eighth or ninth exemplary methods wherein the building of the outer annular band comprises the laying of layers of rubber and reinforcement.

An eleventh exemplary method of constructing non-pneumatic wheel having the characteristics of any one of the eighth, ninth or tenth exemplary methods wherein the curing occurs under pressure and heat.

A twelfth exemplary method of constructing non-pneumatic wheel having the characteristics of any one of the eighth, ninth, tenth or eleventh exemplary methods wherein the mold imprints a tread pattern on the radially outer surface of the outer annular band.

These and other features, aspects and advantages will become better understood with reference to the following description and appended claims. The accompanying drawings, which are incorporated in and constitute a part of this specification, illustrate embodiments and, together with the description, serve to explain the principles.

### BRIEF DESCRIPTION OF THE DRAWINGS

A full and enabling disclosure, including the best mode thereof, directed to one of ordinary skill in the art, is set forth in the specification, which makes reference to the appended figures, in which:
FIG. 1 provides a perspective view of an embodiment of a non-pneumatic wheel.
FIG. 2 provides a perspective view of an embodiment of a hub.
FIG. 3a provides a perspective view of an embodiment of a single spoke of an embodiment of the wheel.
FIG. 3b shows a partial view of a hub and a radially inner end of a spoke having a circular profile.
FIG. 3c shows a partial view of a hub and a radially inner end of a spoke having a square profile.
FIG. 3d shows a partial view of a hub and a radially inner end of a spoke having a rectangular profile.
FIG. 3e shows a partial view of a hub and a radially inner end of a spoke having a kidney shaped profile.
FIG. 4a provides a perspective view of an embodiment of a retaining clip used to secure the single spoke to the hub in one embodiment.
FIG. 4b provides a side view, looking along the axial direction of the retaining clip used to secure the single spoke to the hub.
FIG. 5 provides a perspective view of an embodiment showing the clip secured to the spoke.
FIG. 6 provides a perspective view of an embodiment during assembly, with a portion of each clip protruding through apertures of the hub.
FIG. 7 provides a perspective view of the embodiment during assembly, the portion of the slip protruding through the apertures of the hub bent outward to secure each clip to the hub.
FIG. 8a provides a perspective view of a second embodiment of a hub having clips of unitary construction.
FIG. 8b provides a partial view of the second embodiment having retainers of unitary construction with the hub.
FIG. 9 provides a perspective view of the second embodiment with the radially inner end of all individual spokes secured to the hub.
FIG. 10a provides a perspective view of an apparatus possessing a plurality of radially positionable spoke supports.
FIG. 10b provides a bottom perspective view of the apparatus with radially positionable spoke supports.
FIG. 10c provides a perspective view of an embodiment during assembly, the radially outer ends of each spoke being held radially outward annular orientation by a plurality of spoke supports.
FIG. 11 provides a perspective view of the laying of a bonding layer of material upon the radially outer end surface of each spoke.
FIG. 12 provides a perspective view of a preformed outer annular band and spoke sub-assembly.
FIG. 13 provides a perspective view of the embodiment during assembly, the preformed outer annular band concentrically slipping over the spoke subassembly.
FIG. 14 provides a perspective view of an alternative embodiment wherein the outer annular band, including reinforcement layers, if present, are laid upon the radially outer surfaces of the spokes of the spoke subassembly.
FIG. 15 provides a perspective view of the alternative embodiment during assembly, being placed into a mold for curing of the tread and, if present, reinforcement layers of the tire.
FIG. 16 provides a perspective view of an alternative embodiment of a spoke having a separation creating two web sections.
FIG. 17 provides a perspective view of an alternative embodiment having a plurality of separations creating a plurality of spoke web sections.
FIG. 18 shows a perspective view of an embodiment having a partially split web spoke partially mounted to a hub that permits angular adjustment after the radially inner ends are attached to the hub retainers.

The use of identical or similar reference numerals in different figures denotes identical or similar features.

### DETAILED DESCRIPTION

The present invention provides a novel construction of a non-pneumatic tire. For purposes of describing, reference now will be made in detail to embodiments and/or methods, one or more examples of which are illustrated in or with the drawings. Each example is provided by way of explanation of the embodiments, not limitation of the invention. The scope of the invention is defined by its claims.

The following terms are defined as follows for this disclosure:

"Axial direction" or the letter "A" in the figures refers to a direction parallel to the axis of rotation of for example, the shear band, tire, and/or wheel as it travels along a road surface.

"Radial direction" or the letter "R" in the figures refers to a direction that is orthogonal to the axial direction and extends in the same direction as any radius that extends orthogonally from the axial direction.

"Circumferential direction" or the letter "C" in the figures refers to a direction that is perpendicular to the axial direction and perpendicular to a radial plane.

"Equatorial plane" means a plane that passes perpendicular to the axis of rotation and bisects the shear band and/or wheel structure.

"Radial plane" means a plane that passes perpendicular to the equatorial plane and through the axis of rotation of the wheel.

"Fiber" applies to any type of reinforcing fiber, that can be used as long as the latter is compatible with its matrix. Such a fiber is, for example, chosen from the group constituted by polyvinyl alcohol fibers, aromatic polyamide (or "aramid") fibers, polyamide-imide fibers, polyimide fibers, polyester fibers, aromatic polyester fibers, polyethylene fibers, polypropylene fibers, cellulose fibers, rayon fibers, viscose fibers, polyphenylene benzobisoxazole (or "PBO") fibers, polyethylene naphthenate ("PEN") fibers, glass fibers, carbon fibers, silica fibers, ceramic fibers, and mixtures of such fibers.

As used herein, "inextensible" is a relative term used to refer to one material having at least a ten-fold higher tensile modulus than the material it is embedded within. It should be appreciated that generally in the art of tire construction, it is understood by one of ordinary skill that nylon cords are referred to as inextensible, while the surrounding rubber in which the nylon cords are embedded are considered by one skilled in the art as extensible.

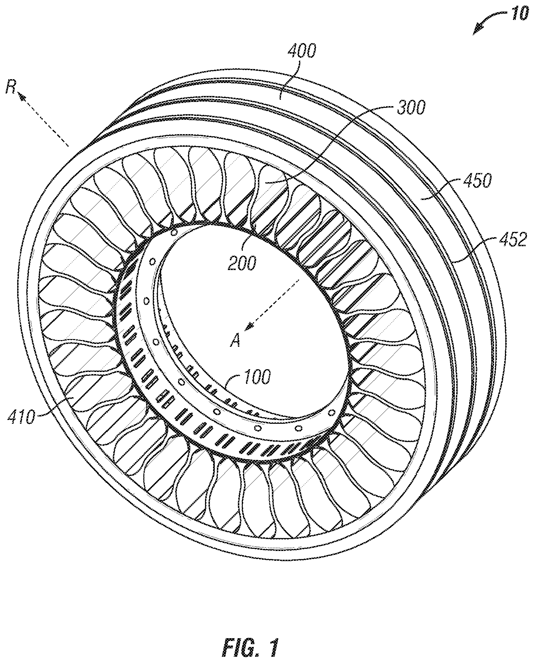

FIG. 1 provides a perspective view of an embodiment of a non-pneumatic wheel 10. The wheel 10 comprises a hub 100 which is connected by a plurality of spokes 300 to an outer annular band 400. The wheel may be used to bear a load against a surface and may be used to move a vehicle across a surface, such as a road, wire, or track. Such a vehicle may include automobile, utility vehicle, cart, tractor, etc. The hub 100 has a generally circular cross section in the radial plane. The hub's "width" extends in the axial direction. The spokes 300 are attached mechanically to the hub 100 by a plurality of retainers 200. The spokes 300 extend from the hub 100 radially outward to the radially inner surface 410 of the outer annular band 400.

The attachment of the spokes to the hub by mechanical means allows the outer portion of the tire to be removed and reattached in the event of a desired change or repair of the outer portion of the tire. Furthermore, an individual spoke from the outer compliant band may be removed and a new individual replacement spoke may be bonded in its place, thereby making replacement of a single spoke. This technique may be useful for repairing a single damaged spoke where it may be undesirable to remove the entire wheel from, say, a vehicle or other apparatus to which it is attached.

The attachment of the spokes to the hub by mechanical means allows for the spokes to be formed of rubber and optionally reinforced using methods of construction that are similar to the methods of construction of conventional pneumatic tires. It can be appreciate that the individual spoke formation allows construction of rubber spokes by positioning rubber components of the same or similar formulations along with optional reinforcements within a mold and then curing the rubber with heat and pressure. Such construction allows for layering of the materials or positioning of the materials side by side and permits multiple types of rubber and optionally reinforcement to be positioned with a precision that would be very difficult to achieve using casting or injection molding manufacturing techniques. The outer band, which may be constructed with rubber and reinforcements, can then be secured to the spokes by bonding the rubber spokes to the rubber outer band by curing the green rubber outer band onto the radially outer surfaces of the rubber spokes. By using materials within the same family, a very strong bond can be formed without the use of adhesives. For example, the spokes may be formed and cured or partially cured then arranged with the outer radial surfaces positioned along the circumference of a circle, then green rubber may be used to build the outer band around the circumference and the assembly then cured. Alternatively, a cured or partially cured rubber outer band may be attached to a cured or partially cured plurality of spokes by laying a layer of green rubber between the radially outer surfaces of the spokes and the radially inner surface of the outer band. Alternatively an adhesive or other bonding agent may be applied, for example, when bonding dissimilar materials such as a polyurethane to rubber.

The outer annular band 400 provides a radially outer surface 450 which may have a tread pattern, such as grooves 452, divots, slits or other features, or a combination of features, for ornamental and/or a utilitarian purpose. The outer annular band 400 in the present embodiment is compliant, in that it will deform under loading to absorb momentary deflections such as bumps in the surface, such as the ground, that the wheel is placed against.

The outer annular band 400, may include reinforcements, including such reinforcements having a high modulus in compression and tension such as metal cords, fiberglass, fiber reinforced plastics, or carbon fiber. The spokes 300, as shown in the embodiment here are compliant membranes of a elastomeric materials, such as a natural, synthetic rubber, polyurethane, silicone, and may be reinforced with cords having a higher tensile modulus including nylon, polyester, aramid fibers or other reinforcements such as metal cord. When a load is applied to the wheel 10, the load is transmitted through the hub 100 and spokes 300 positioned around the hub through the outer annular band 400 to the ground. Since the spokes, are largely deformable and will buckle under loading, a significant portion of the load is transferred through the spokes on the top half of the wheel. This is generally referred to herein as a "top loading" wheel, as opposed to a "bottom loading" wheel that would carry the load through the bottom of the tire, such as might be found in a solid tire, or a foam filled pneumatic tire.

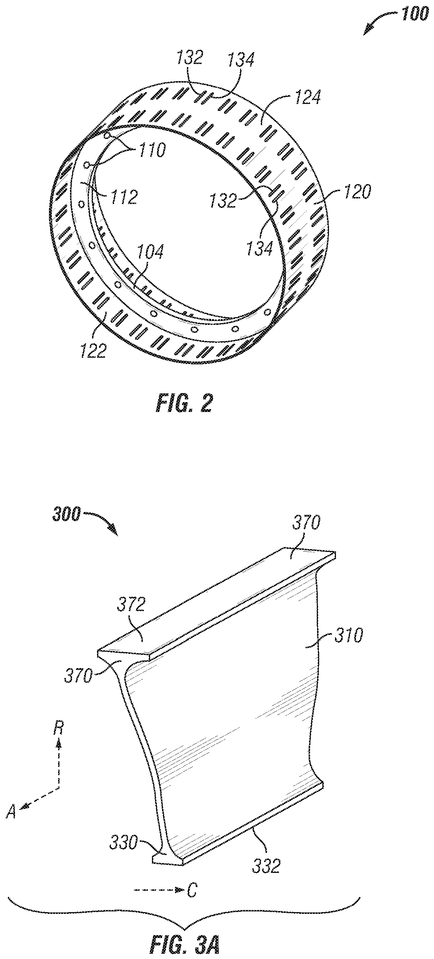

FIG. 2 provides a perspective view of an embodiment of a hub. In the embodiment shown a plurality of apertures 110 positioned on a flange 112 and concentrically spaced adjacent to the inner periphery 104 of the hub 100 provide a location for fasteners, such as studs or bolts to pass for fastening to a wheel bearing hub or an additional inner hub component. The flange 112 is attached to a radially inner surface 122 of a cylindrical ring 120. A plurality of apertures 132, 134, here shown as slots, are formed about the cylindrical ring 120 between the radially outer surface 124 and the radially inner surface 122 of the cylindrical ring 120.

FIG. 3a provides a perspective view of an embodiment of a single spoke 300 used in the embodiment shown in FIG. 1. The spoke is constructed from a compliant material such as plastic or rubber, and may contain a reinforcement material embedded in the web 310 of the spoke 300. In the embodiment shown, a reinforcement runs along the length of the spoke in the spoke's radial direction R. The radial orientation of the reinforcement allows the reinforcement to carry in tension a portion of the load placed upon the wheel. The amount of load carried by the spoke in compression may vary depending upon the material properties and stiffness used in constructing the spoke, however, in the embodiment shown here, a plurality of radially oriented nylon cords embedded in a rubber spoke allow the spoke to carry more load in tension when the spoke is at the top portion of the wheel and less in compression when the wheel is rotated such that the spoke is at the bottom location of the wheel, resulting in a "top loading" wheel.

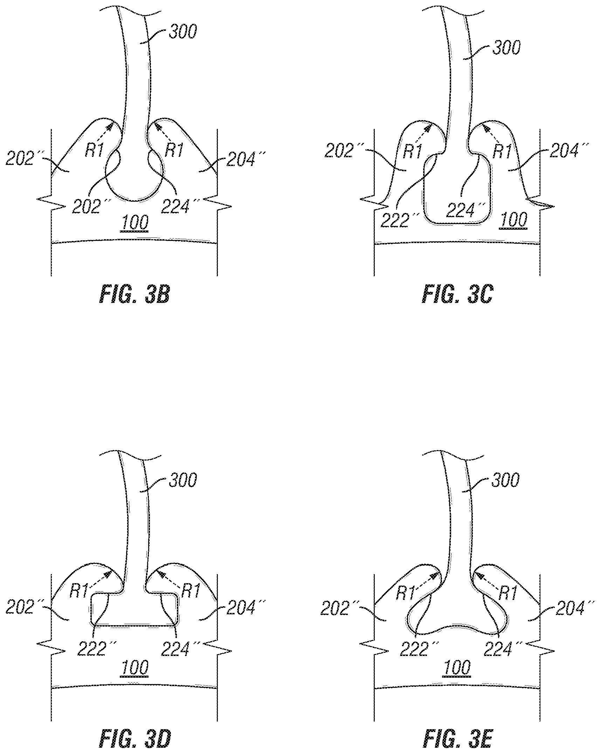

The radially inner end 330 of the spoke 300 is thicker in a circumferential direction (a direction perpendicular to the radial plane and axial direction) than the web 310 of the spoke 300. Shown here, the radially inner end 330 possesses a generally triangular shape when viewed from the axial direction having a flat radially inner surface 332. The thickened portion extends axially across the lateral width of the spoke. While the shape shown in the embodiment shown in FIG. 3a is triangular, having a thickness that flares out at the radially inner surface 332, it should be recognized that other thickened geometries could be substituted, such as circular shape, rectangular shape, or bulbous shape. FIG. 3b shows an exemplary embodiment of an inner end of a spoke 300 possessing a circular shape. FIG. 3c shows an exemplary embodiment of an inner end of a spoke 300 possessing a rectangular shape. In this particular embodiment, the rectangular shape is a square and the surfaces are not perfectly flat. FIG. 3d shows an exemplary embodiment of an inner end of a spoke 300 possessing a rectangular shape. FIG. 3e shows an exemplary embodiment of an inner end of a spoke 300 possessing a kidney shape, having both a convex and concave border. As shown here, the radially inner end 330 is more than double the thickness of the thinnest portion of the spoke web 310.

The radially outer end 370 of the spoke 300 is thicker in a circumferential direction than the web 310 of the spoke. Shown here, the radially outer end 370 possesses a generally triangular shape when viewed from the axial direction having a flat radially outer surface 372. While the shape shown in the present embodiment is triangular, having a thickness that flares out to a radially outer surface 372, it should be recognized that other thickened geometries could be substituted, such as a rectangular shape. As shown here, the radially outer end 370 is more than double the thickness of the thinnest portion of the spoke web 310.

The spoke 300, and it's web 310 may possess a curvature, such as an arcuate shape, when viewed from the axial direction. Such a curvature predisposes the spoke to buckle and fold in a desired direction when compressed. The spokes width, measured in the axial direction, may also vary along the radial direction of the spoke 300. Shown in the present embodiment, the spoke is wider at the radially outer end 370 than at the radially inner end 330.

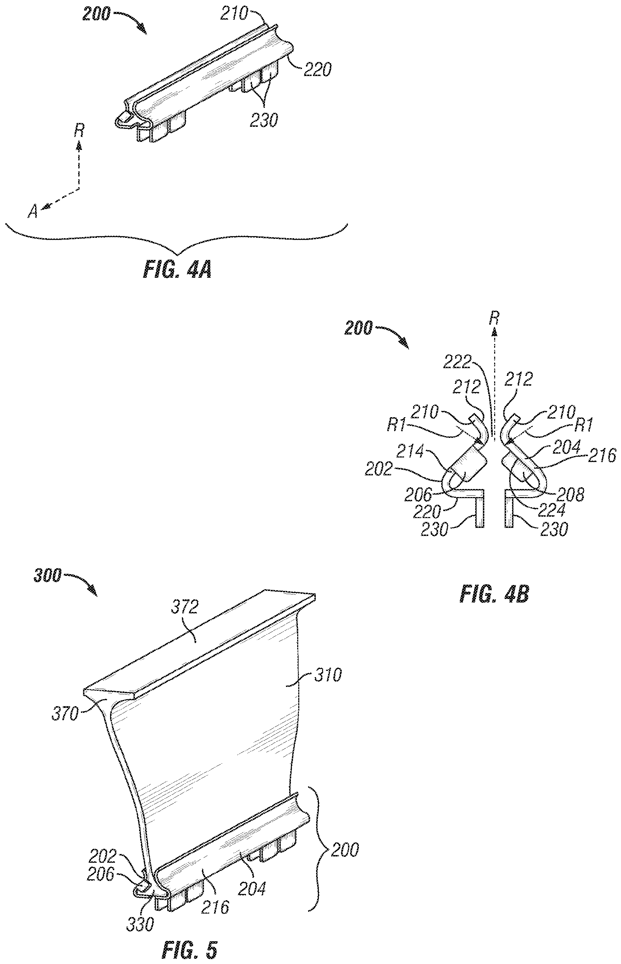

FIG. 4a provides a perspective view of an embodiment of a retainer 200, shown here as a retainer clip, used to secure the single spoke to the hub 100 in the embodiment shown in FIG. 1 and FIG. 2. The clip 200 of the embodiment shown possesses a radially outer end 210 and a radially inner end 220. In this embodiment, a plurality of tabs 230 protrude radially inward from the inner end 220 of the clip 200. The tabs 230 have a length in the axial direction and a thickness in the longitudinal direction that allow the tabs to slip though the slits 132, 134 of the hub 100 before securing the clip 200 such as by deforming the tabs 230 such as by bending, twisting or warping.

FIG. 4b shows an axial view of the retainer clip 200. The retainer of the current embodiment is comprised of two halves 202, 204 formed from sheet metal, cut and bent into the shape as shown. Each half possesses a retaining surface 222, 224 that impinges upon the spoke 300. The two halves 202, 204 are identical in the embodiment shown, with each half rotated about a radial axis 180 degrees from the other such that the geometry of each half 202, 204 generally is mirrored across a center radial plane that bisects the retaining clip 200.

In this embodiment the radially outer portion 210 of the clip 200 possesses a flared edge. The term "flared edge" means that the outer portion 210 of the clip curves away from the center radial plane, forming a curvature 212 having a radius R1. The curvature 212 of the outer portion 210 of the first half 202 (and corresponding retaining surface 222) away from the second half 204, and the curvature 212 of the outer portion 210 of the second half 204 (and corresponding retaining surface 224) away from the first half 202 prevents a concentration of bending stresses within the spoke web 310 providing for improved durability. Where the spoke is predisposed to only bend in a single circumferential direction, only one of the two halves 202, 204 need to possess a curvature 212 to provide a reduction of bending stresses within the spoke web 310.

The retaining clip's 200 interior surfaces possess a similar shape to the shape of the radially inner end 330 of the spoke 300. The sidewalls 214, 216 form a generally triangular shape when viewed from the axial direction, widening near the radially inner end 220 of the retaining clip 200. Tabs 230 extend radially inward from the inner end 220 of the retaining clip. Spoke stop tabs 206, 208 are shown bent at a 90-degree angle from the sidewall of each clip half 202, 204. In the embodiment shown, at least one spoke stop tab 206, 208 is positioned on each clip half 202, 204.

The retaining clip 200 of the current embodiment shown is formed from sheet metal, which allows for economical construction and modular replacement of the retaining clip in case of damage or wear. Other materials and construction methods are contemplated such as using metal or plastics and formation by machining, casting, injection molding, etc.

FIG. 5 provides a perspective view of the embodiment showing the clip 200 secured to the spoke 300. The spoke 300 is prevented from moving in the axial direction by a spoke stop tab 206, 208 on each of the spoke clip halves 202, 204. The sidewalls, 214, 216 press upon the radially inner portion 330 of the spoke 300 when the clip 200 is secured in the slots 132, 134 of the hub 100. Since the first and second half 202, 204 of the retainer 200 are identical and rotated 180 degrees from one another, a single tab stop located on the axial end of each half 202, 204 prevents egress of the spoke 300 from either end of the retainer 200.

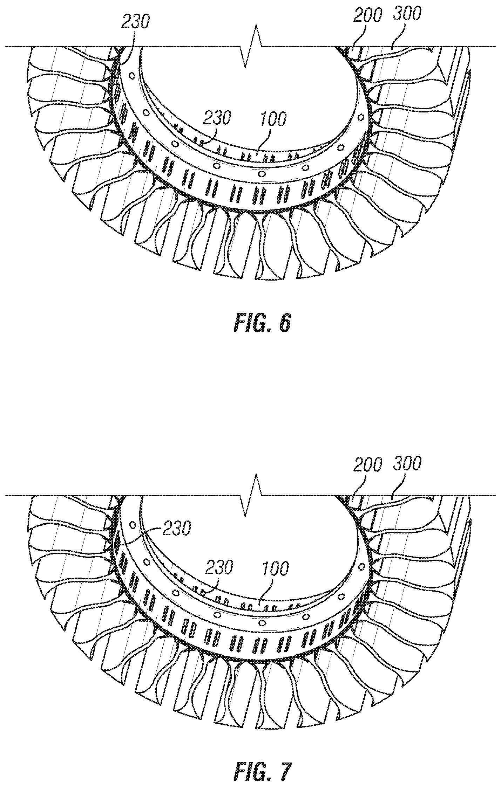

FIG. 6 provides a partial perspective view of the embodiment during assembly, with a portion of each clip 200 protruding through apertures 132, 134 of the hub 100.

FIG. 7 provides a perspective view of the embodiment during assembly, the portion of the retaining clip 200 protruding through the apertures 132, 134 of the hub 100 are deformed to secure each clip to the hub. Particularly in this embodiment, the tabs 130 extend through the apertures 132, 134 with the spokes securely held between each half. The tabs 130 are pressed away from the center radial plane that bisects the retaining clip 200. The retainers 200 press against the thickened bulbous portion of the spoke 300 securing the spoke 300 to the hub 100.

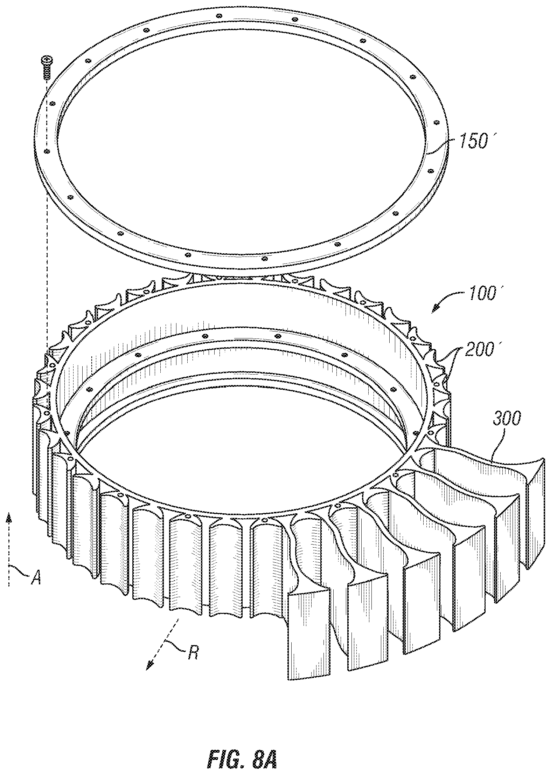

FIG. 8a provides a perspective view of a second embodiment of a hub having retainers of unitary construction with the hub. Here, the hub 100' and retainers 200' are constructed of unitary construction with the cylindrical structure 120'. The inner surfaces of the retainers form slots in the outer surface of the hub 100'. In this embodiment, the spoke 300 is assembled by sliding in the spoke from the axial direction A into each slot. One or more fasteners, such as a plate 150', can be placed over one or both of the axial ends of each spoke 300 to prevent egress of the spoke from either end of the slot. As with the first embodiment, the slot formed by the retainer clip 200' provides an inner surface to clamp the radially inner end 330 of the spoke to the hub 100'.

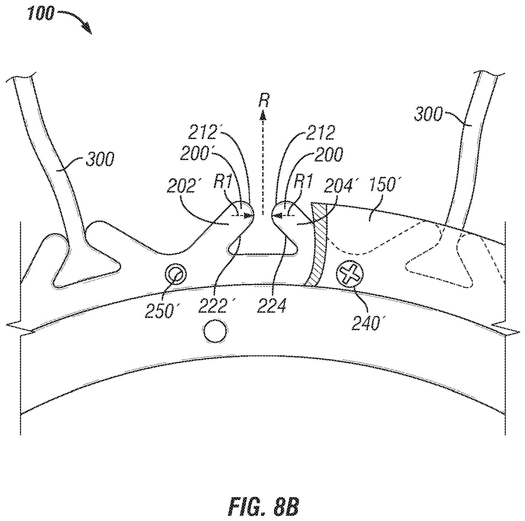

FIG. 8b provides a partial view of the second embodiment having retainers of unitary construction with the hub. Here the fastener plate 150' is partially shown secured with a fastener 240', here a bolt having a Phillips style head, secured to one of a plurality of threaded apertures 250' in the hub 100'. The retainer 200' possesses a first retaining surface 222' and a second retaining surface 224' that, like the first embodiment, impinges upon the thickened radially inward portion of the spoke 300'. In this embodiment the radially outer portion of the clip 200' possesses a flared edge such that the outer portion curves away from the center radial plane that would bisect the retainer, forming a curvature 212' having a radius R1. The curvature 212' of the outer portion of the first half 202' (and corresponding retaining surface 222') curves away from the second half 204', and the curvature 212' of the outer portion of the second half 204' (and corresponding retaining surface 224') curves away from the first half 202' prevents a concentration of bending stresses within the spoke 300' providing for improved durability. Where the spoke is predisposed to only bend in a single circumferential direction, only one of the two halves 202', 204' need to possess a curvature 212' away from the opposing half to provide a reduction of bending stresses within the spoke web 310'.

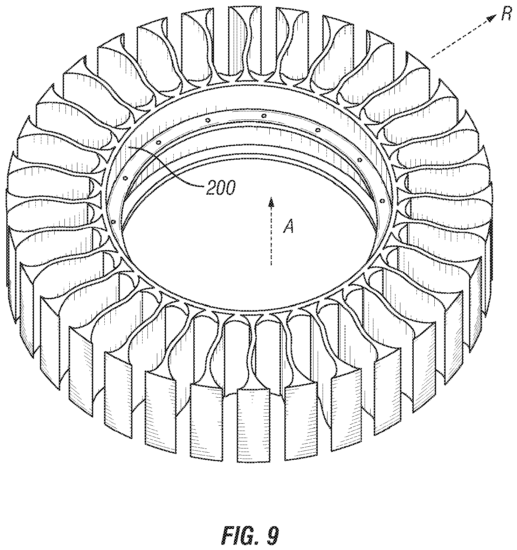

FIG. 9 provides a perspective view of the second embodiment with the radially inner end of all individual spokes secured to the hub 100'. In this second embodiment, the hub 100' may be constructed from a metal, such as aluminum, and machined to have the shape as desired. It should be understood that other methods of construction and materials are also possible and within the scope of this disclosure, such as casting or injection molding, or using metals or other structural materials, such as plastics, or composites such as fiberglass, reinforced resins, carbon fiber, fiber reinforced plastics.

Once the radially inner portion 330 of the spokes 300 are secured to the hub 100 or 100', the attachment of an outer annular band is needed. Since the spokes have little compressive resistance, an apparatus to hold them in position is needed to proceed in applying the outer annular band and to provide a desired level of spoke tension for the wheel in the unloaded state.

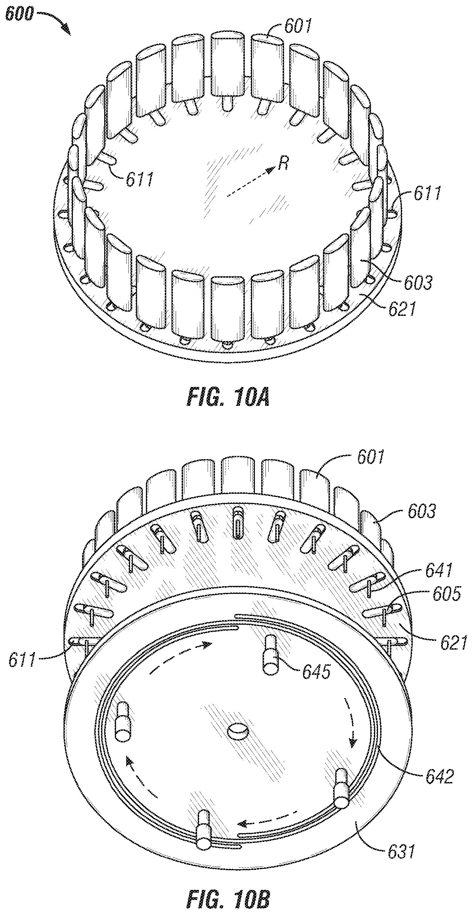

FIG. 10a provides a perspective view of an apparatus 600 possessing a plurality of spoke supports 601 to support the radially outer end of the spokes 300. The spoke supports 601 hold the radially outer ends of the spokes 300 in a radially outward annular orientation. In this embodiment, the spoke supports 601 resemble fingers and are able to be moved and positioned in the radial direction R such that the outer surface 603 of the fingers 601 can exert a force against the spokes in the radial direction. Tracks 611 oriented in the radial direction on a first plate 621 allow for movement of the spoke supports 601 in the radial direction. The tracks 611 in the present embodiment are created by slots 611 formed, for instance by cutting, into the first plate 621 of the apparatus 600. These slots allow for movement of the fingers 601 in the radial direction while maintaining alignment relative to the outer reinforcement band. The tracks 611 may be provided with a corresponding tongue and groove features which would prevent the fingers 601 from tilting during operation.

FIG. 10b provides a bottom perspective view of the apparatus 600. The bottom portion of the finger-like spoke supports 601 possess slides 605 which engage the tracks, here slots, 611 formed in the first plate 621. The slides 605 possess pins 641 extending downward past the underside of the first plate 621. Pins 641 engage a spiral groove 642 in a second plate 631 which acts as an actuation member. The second plate 631 may be rotated by turning arms 645, as shown by arrows, or the movement may be automated by any of a variety of mechanisms, such as by an axle affixed to the second disk 631 or a combination of teeth on the outer circumference of the actuation disk 631 and gears engaging the teeth.

In alternative embodiments, spiral grooves 642 are not cut completely through the second plate 631, and the lower tips of the pins 641 are each provided with a small ball bearing which rides in spiral grooves 642. In yet another alternative embodiment, the spoke supports 601 are moved by individual actuators, such as pneumatic, hydraulic or electromechanical linear actuators

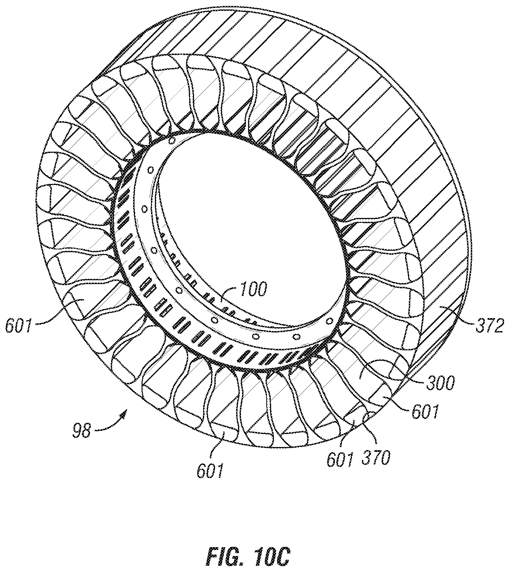

FIG. 10c provides a perspective view of an embodiment, comprising the first embodiment of the hub 100, during assembly. The radially outer ends 370 of each spoke 300 are held radially outward in an annular orientation by a plurality spoke supports 601. These fingers 601 are held in position by an apparatus, such as the one describe above, to hold their relative position to one another, but allow rotation of the spoke subassembly 98. Each adjacent finger 601 holds the radially inner surface of the outer portion 370 of each spoke, holding the radially outer surface 372 of each spoke in position for outer annular band attachment.

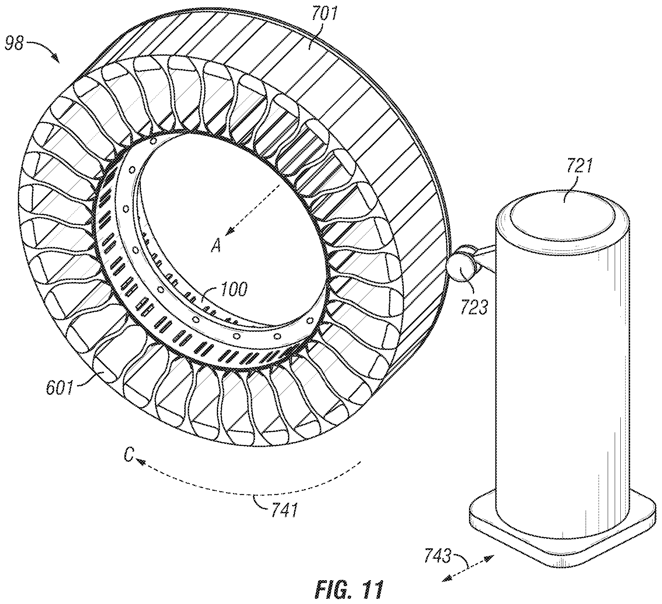

FIG. 11 provides a perspective view of the laying of a bonding layer of material 701 upon the radially outer end surface of each spoke 300 of the wheel precursor 98. The bonding layer of material 701 may include an uncured rubber strip which can be wound around the outer surface 372 of each spoke, or may include an adhesive for bonding the outer surface 372 to the outer annular band. The material may be dispensed by an extruder 721, then applied by a roller 723 adjacent to the spoke subassembly 98. In this particular embodiment, the extruded material has a width in the axial direction that is less than the width of the finished outer annular band to be bonded to the spokes. As the spoke subassembly 98 rotates about a circumferential direction C, the extruder 721 and roller 723 move in the axial direction applying the bonding layer across the entire outer circumference of the spoke subassembly 98 as shown by the arrows 741, 743 respectively. It should be appreciated that the spoke subassembly 98 may move axially relative to the extruder 721 and likewise the extruder 721 may rotate about the spoke subassembly 98.

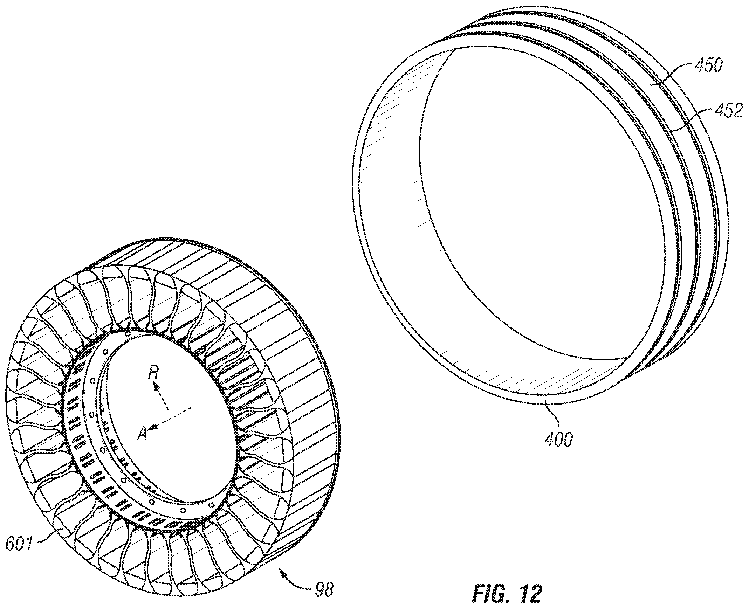

FIG. 12 provides a perspective view of a preformed outer annular band 400 and spoke sub-assembly 98. The outer annular band 400, may be formed separately by traditional tire manufacturing techniques and may comprise of reinforcements including cords such as metal, fiberglass, fiber reinforced plastics, or carbon fiber. Prior to assembly with the spoke subassembly 98, the outer band 400 may be cured and a tread pattern applied to the outer surface.

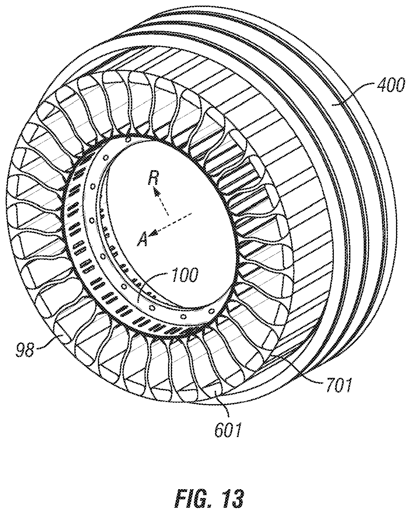

FIG. 13 provides a perspective view of the embodiment during assembly, as the preformed outer annular band 400 is concentrically slipping over the spoke subassembly 98. The spoke subassembly 98 has an outer diameter that is less than the inner diameter of the outer annular band 400, allowing the outer annular band to be placed over the spoke sub-assembly 98. To facilitate outer annular band and spoke sub-assembly positioning, the radial position of the spoke supports 601 may be retracted radially inward to reduce the outer diameter of the spoke sub-assembly 98 while the outer band 400 is positioned around the spoke subassembly 98. Once the outer annular band and spoke sub-assembly are positioned relative to one another, the radial position of the spoke supports 601 may then be expanded radially outward so that the bonding layer 701 makes contact with the inner surface of the outer annular band. Once the preformed outer annular band 400 and the spoke subassembly 98 are assembled, heat and pressure may be applies to cure the bonding layer 701 or expanded for a time sufficient to allow an adhesive to cure.

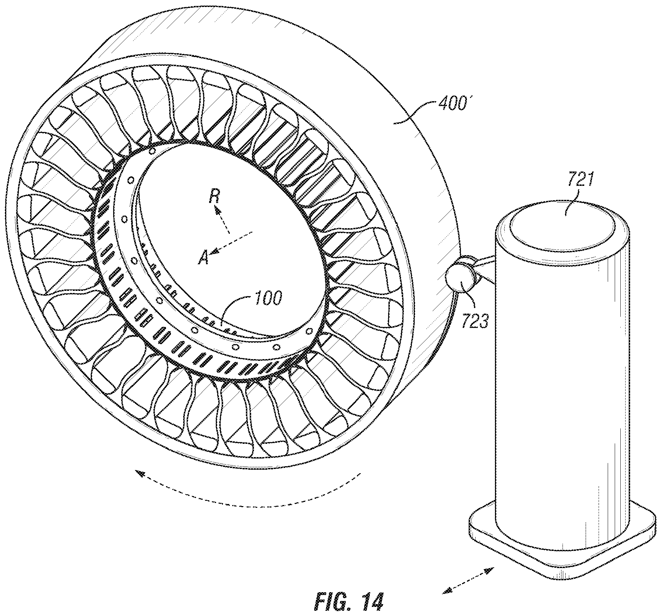

FIG. 14 provides a perspective view of an alternative embodiment wherein the outer annular band 400' and reinforcement layers, if present, are laid upon the spoke subassembly 98 held outward by a plurality of spoke supports 601. In this particular embodiment, the spoke supports 601 resemble finger like protrusions which position and hold the radially outer end of the spokes 300. Here, the extruder 721 delivers strips of rubber and/or tissue that is applied by a roller 723 to the exterior surface of the spoke sub-assembly 98. The spoke subassembly rotates as the extruder 721 moves in an axial direction to apply the strips of rubber to the entire width of the tire. It should be appreciated that the wheel may move axially relative to the extruder 721, and likewise the extruder 721 may rotate about the spoke sub-assembly 98.

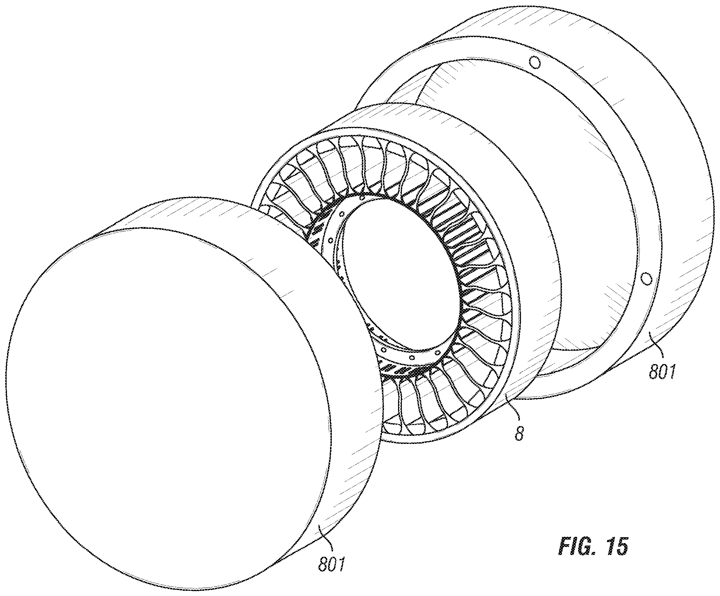

FIG. 15 provides a perspective view of the alternative embodiment during assembly, the wheel precursor 8 being placed into a mold 801 for curing of the outer annular band including, if present, the reinforcement layers of the outer annular band and tread layer. The mold then applies pressure and heat to cure the outer annular band and form a tread pattern, if desired, into the outer surface of the outer annular band. The inner fingers 601 maintain radially outward pressure during curing.

Upon completion of curing and or bonding of the spokes to the outer annular band, a non-pneumatic tire is formed.

Spoke tension affects the performance of the tire, much like how air pressure in a pneumatic tire may affect a pneumatic tires performance. The final spoke tension of an unloaded wheel can be changed by designing the tire with a specific spoke length for the distance it must span between the hub and outer band. For example, by molding shorter spokes for a tire having the same diameter hub and outer band, the spoke tension is increased. Likewise molding longer spokes for a tire having the same dimensioned hub and outer band, would result in a lower spoke tension.

Alternatively, or in addition with choosing a specific spoke length, the spoke tension can be increased by applying a greater tension when forming the outer band, or attaching an outer band of a greater inner diameter. Attaching an outer band of a smaller inner diameter, or applying a smaller amount of tension when forming the outer band would result in spokes having a reduced tension.

Alternatively, or in addition, the hub diameter may be chosen so as to arrive at the desired spoke tension. Choosing a hub diameter which is greater would result in reduced spoke tension, while choosing a hub diameter which is smaller would result in a greater spoke tension.

Alternatively, or in addition, spoke tension may be changed by choosing reinforcements having a known shrinkage rate. For example, it is known that certain fibers are known to have a thermal shrinkage rate greater than other fibers, resulting in shrinkage upon the application of heat during curing of the rubber surrounding the fibers. This shrinkage results in increased spoke tension. By choosing fibers having a known thermal shrinkage rate, the finished spoke tension may be determined and adjusted by choosing alternative fibers having a different known thermal shrinkage rate. For example, substituting an aramid fiber reinforcement having a greater thermal shrinkage rate for a polyester fiber reinforcement having a lower thermal shrinkage rate would result in spokes in the finished assembled tire having a greater spoke tension than the spokes reinforced with the polyester fiber reinforcement.

While spoke tension may be adjusted during construction of the tire by adjusting one or more of the parameters discussed above, deradialization of the spokes may also be used to adjust spoke tension. Increasing the deradialization of the spokes for a hub of a given outer diameter and an outer band of a given inner diameter increases spoke tension. Likewise decreasing the deradialization of the spokes for a hub of a given outer diameter and an outer band of a given inner diameter increases spoke tension.

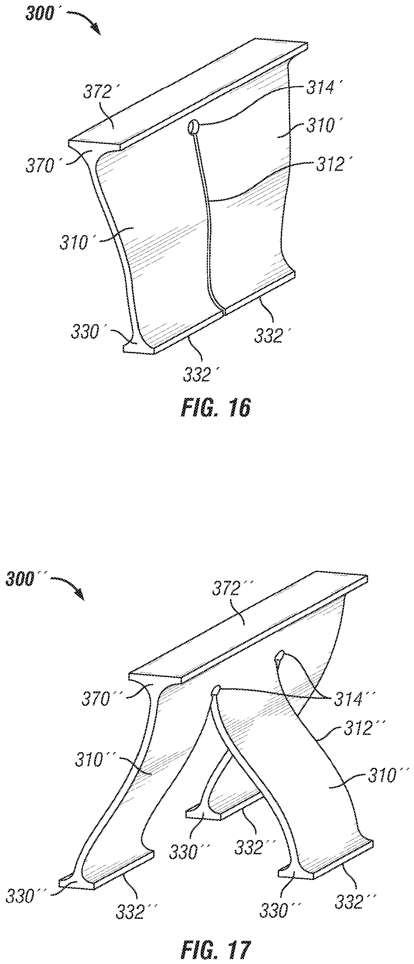

FIG. 16 shows an embodiment of a spoke 300' having a split web 310'. The web possesses a separation 312' that begins at the radially outer end of the spoke web 310' and continues radially inward through the inner end 330' of the spoke 300' forming two spoke web sections. The radially outer end of the separation 312' may possess an enlarged radius 314' to reduce stress concentrations. The separation 312' allows the radially inner ends of the spoke 300' to be positioned in separate slots within the hub 100 to allow for deradialization of the spoke webs 310' when the wheel is constructed. Partial separation of the spoke up to the radially outer portion of the spoke 300' allows for less expensive construction and simplified assembly of the spoke 300' onto the hub by reducing the number of parts having to be handled during the manufacturing process.

FIG. 17 shows an embodiment of a spoke 300" having a split web 310" where the web possesses a plurality of separations 312" that begin at the radially outer end of the spoke web 310' and continue radially inward through the inner end 330" of the spoke 300". The plurality of separations 312" allow for deradialization of the spoke webs 310" at different angles from the radial direction and also allows for a symmetric deradialization. For example, as shown here, the outer two spoke webs 310" are positioned in the same circumferential location, while the center spoke web 310" is positioned at a different circumferential location creating a symmetric deradialization of the spoke web". Other deradialization patterns are possible, including asymmetric deradialization patterns. While separation of the spoke web 310" into three spoke web sections is shown here by two separations, it should be understood that three, four or more separations 312" are possible and within the scope of the embodiments described herein.

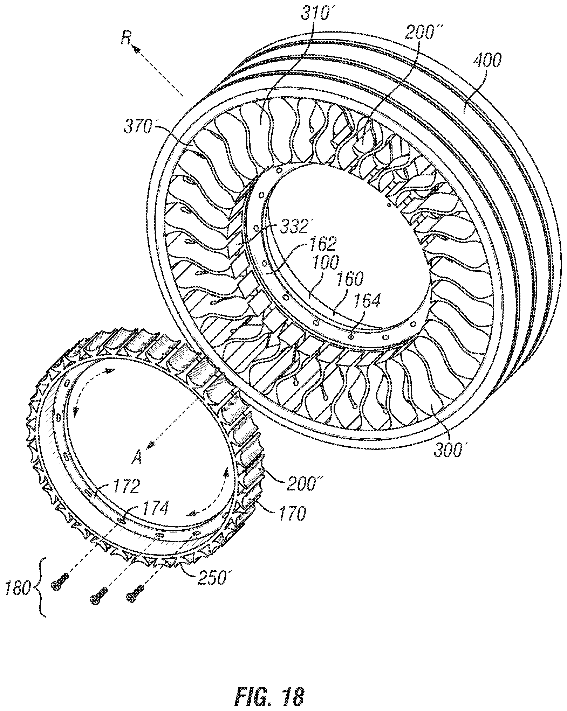

FIG. 18 shows an embodiment of a hub 100 where a split web spoke 300' is partially mounted in a deradialized position. The hub 100 possesses an first annular ring portion 160 and a second annular ring portion 170 which may be mounted together with a plurality of fasteners 180, three of which are shown, through apertures 174, 164. In the embodiment shown, the fasteners 180 screw into threaded apertures 164 and pass thorough slot shaped apertures 174 in the second annular ring portion 170. The slots shaped apertures 174 of this embodiment allow for circumferential rotational adjustment prior to tightening the plurality of fasteners 180 down as shown by the arrows.

Circumferential rotational adjustment allows the radially inner portion of the spokes 300' to be secured within the slots of the second annular ring portion 170 and then the second annular ring portion 170 may be rotated to increase or decrease spoke tension as desired. Increasing spoke tension increases circumferential compressive forces in the outer band, which results in less deformation of the outer band and a smaller footprint of the tire for a given load. Decreasing spoke tension decreases circumferential compressive forces in the outer band, which results in larger deformation of the outer band and a larger footprint of the tire for a given load.

Reducing or increasing the spoke tension allows the tire to be tuned for the type of use the operator will expose it to. Reduced deformation of a tire results in reduced rolling resistance, while increased deformation results in higher shock absorption and comfort. Higher spoke tension is desirable in certain instances, for example: Higher spoke tension would be desirable for on-road use of a tire over a smooth surface where reduced rolling resistance is beneficial. Lower spoke tension may be desirable in certain instances, for example: Lower spoke tension would be desirable for off road use where the deformation of the outer band allows for conformation to uneven surfaces and absorption of shock. Lower spoke tension also allows for greater footprint pressure which reduces compaction and can increase traction when traversing off-road terrain.

It should be understood that it may be desirable to maintain the same spoke tension throughout the tires operational life, or it may be desirable to periodically allow for changes in the spoke tension as desired by the operator. It also should be understood that actuators, such one or more mechanical actuator, could be attached to the rim to allow for adjustment of the spoke tension by rotating one annular ring portion relative to the adjacent annular ring portion. The system to adjust the spoke tension could be controlled by the operator, or by a computer control system, or by some combination thereof.

It should be understood that a plurality of ring portions are possible, hence a web that has been separated into three web portions would have a corresponding three ring portions which could rotate relative to one another. In such an embodiment the outer two ring portions could rotate relative to the middle ring portion, or each ring portion could rotate independent of each other. Tires having four ring portions and a corresponding four web portions, or five ring portions and a corresponding five web portions, or other number or ring portions and web portions could be possible and within the scope of these embodiments.

It should be understood that other web element configurations and geometries may be used within the scope of the embodiments, including web elements which are interconnected such as where they may form a honeycomb or other pattern.

## Claims

1. A method of constructing a non-pneumatic wheel (10) comprising:
securing a plurality of spokes (300) around the outer circumference of a hub (100);
positioning an at least one spoke support (601) at the radially outer end of each spoke (300) such that the at least one spoke support (601) holds the radially outer end of each spoke (300) in a radially outward annular orientation;
placing an outer annular band (400) concentrically over the radially outer ends of the spokes (300);
**characterized by** the method further comprising:
bonding the spokes (300) to the outer annular band (400);
contracting the at least one spoke support (601) radially inward; and
separating the at least one spoke supports (601) from the non-pneumatic wheel (10).

2. The method of claim 1 wherein after said placing the outer annular band (400) concentrically over the radially outer ends of the spokes (300), expanding said at least one spoke supports (601) radially outward.

3. The method of claim 1 further comprising applying a bonding layer (701) to the radially outer surface of each spoke (300).

4. The method of claim 3 wherein the bonding layer (701) outer surface is attached by curing the bonding layer (701) to the outer annular band (400) by the application of pressure and heat.

5. The method of claim 3 wherein the outer bonding layer (701) is an adhesive which bonds the radially outer surface of each spoke (300) to the outer annular band (400).

6. The method of claim 1 wherein the bonding the spokes (400) to the outer annular band (400) comprises:
building the outer annular band (400) upon the radially outer surface of each spoke (300) of the spoke substructure;
placing the outer annular band (400) and spoke substructure into a mold (801); curing the outer annular band (400).

7. The method of claim 5 wherein the building of the outer annular band (400) comprises the laying of layers of rubber and reinforcement material upon the radially outer surface of the spokes (300).

8. The method of claim 1 wherein the curing occurs under pressure and heat.

9. The method of claim 1 wherein the mold (801) imprints a tread pattern on the radially outer surface of the outer annular band (400).

10. The method of claim 1 wherein the plurality of spokes (300) are secured to the hub (100) by a mechanical connection.

11. The method of claim 1 wherein the plurality of spokes (300) are secured to the hub (100) by at least one retainer (200), wherein each retainer (200) comprises a first retaining surface (222) and a second retaining surface (224) and the radially outer portion (210) of the first retaining surface (222) possesses a flared edge such that the radially outer portion (210) of the first retaining surface (222) curves away from the radially outer portion (210) of the second retaining surface (224).

12. The method of claim 11 wherein the radially outer portion (210) of the second retaining surface (224) possesses a flared edge such that the radially outer portion (210) of the second retaining surface (224) curves away from the radially outer portion (210) of the first retaining surface (222).

13. The method of claim 1 wherein each spoke support (601) is a finger-like projection.

14. The method of claim 1 wherein each of the at least one spoke supports (601) are positioned between adjacent spokes (300).

15. A non-pneumatic wheel (10) constructed in accordance with claim 11 or 12.

## Patentansprüche

1. Verfahren zur Herstellung eines nicht-pneumatischen Rades (10), umfassend:
Befestigung einer Vielzahl von Speichen (300) am Außenumfang einer Nabe (100);
Positionieren mindestens eines Speichenträgers (601) am radial äußeren Ende jeder Speiche (300), sodass der mindestens eine Speichenträger (601) das radial äußere Ende jeder Speiche (300) in einer radial nach außen gerichteten ringförmigen Ausrichtung hält;
Anbringen eines äußeren ringförmigen Bandes (400) konzentrisch über den radial äußeren Enden der Speichen (300);
**dadurch gekennzeichnet, dass** das Verfahren weiterhin umfasst:
Aufkleben der Speichen (300) auf das äußere ringförmige Band (400);
Zusammenziehen des mindestens einen Speichenträgers (601) in radialer Richtung nach innen; und
Trennen des mindestens einen Speichenträgers (601) vom nicht-pneumatischen Rad (10).

2. Verfahren nach Anspruch 1, bei dem nach dem Anbringen des äußeren ringförmigen Bandes (400) konzentrisch über den radial äußeren Enden der Speichen (300) der mindestens eine Speichenträger (601) radial nach außen gedehnt wird.

3. Verfahren nach Anspruch 1, das ferner das Aufbringen einer Klebeschicht (701) auf die radial äußere Oberfläche jeder Speiche (300) umfasst.

4. Verfahren nach Anspruch 3, bei dem die äußere Oberfläche der Klebeschicht (701) durch Aushärten der Klebeschicht (701) am äußeren ringförmigen Band (400) durch Anwendung von Druck und Wärme befestigt wird.

5. Verfahren nach Anspruch 3, wobei die äußere Klebeschicht (701) ein Klebstoff ist, der die radial äußere Oberfläche jeder Speiche (300) mit dem äußeren ringförmigen Band (400) verbindet.

6. Verfahren nach Anspruch 1, wobei das Verbinden der Speichen (400) mit dem äußeren ringförmigen Band (400) umfasst:
Aufbau des äußeren ringförmigen Bandes (400) auf der radial äußeren Oberfläche jeder Speiche (300) des Speichenunterbaus;
Einlegen des äußeren ringförmigen Bandes (400) und des Speichenunterbaus in eine Form (801);
Aushärtung des äußeren ringförmigen Bandes (400).

7. Verfahren nach Anspruch 5, wobei der Aufbau des äußeren ringförmigen Bandes (400) das Aufbringen von Schichten aus Gummi und Verstärkungsmaterial auf die radial äußere Oberfläche der Speichen (300) umfasst.

8. Verfahren nach Anspruch 1, wobei die Aushärtung unter Druck und Wärme erfolgt.

9. Verfahren nach Anspruch 1, bei dem die Form (801) ein Laufflächenmuster auf die radial äußere Oberfläche des äußeren ringförmigen Bandes (400) aufprägt.

10. Verfahren nach Anspruch 1, wobei die mehreren Speichen (300) durch eine mechanische Verbindung an der Nabe (100) befestigt sind.

11. Verfahren nach Anspruch 1, bei dem die Vielzahl von Speichen (300) durch mindestens einen Halter (200) an der Nabe (100) befestigt sind, wobei jeder Halter (200) eine erste Haltefläche (222) und eine zweite Haltefläche (224) aufweist und der radial äußere Abschnitt (210) der ersten Haltefläche (222) eine aufgeweitete Kante besitzt, sodass der radial äußere Abschnitt (210) der ersten Haltefläche (222) sich von dem radial äußeren Abschnitt (210) der zweiten Haltefläche (224) wegbiegt.

12. Verfahren nach Anspruch 11, bei dem der radial äußere Abschnitt (210) der zweiten Haltefläche (224) eine aufgeweitete Kante aufweist, sodass sich der radial äußere Abschnitt (210) der zweiten Haltefläche (224) von dem radial äußeren Abschnitt (210) der ersten Haltefläche (222) wegbiegt.

13. Verfahren nach Anspruch 1, bei dem jeder Speichenträger (601) ein zahnartiger Vorsprung ist.

14. Verfahren nach Anspruch 1, bei dem jeder des mindestens einen Speichenträgers (601) zwischen benachbarten Speichen (300) angeordnet ist.

15. Nicht-pneumatisches Rad (10) nach Anspruch 11 oder 12.

## Revendications

1. Procédé de construction d'une roue sans air (10) comprenant :
la fixation d'une pluralité de rayons (300) autour de la circonférence externe d'un moyeu (100) ;
le positionnement d'au moins un support de rayon (601) à l'extrémité radialement externe de chaque rayon (300) de sorte que l'au moins un support de rayon (601) maintienne l'extrémité radialement externe de chaque rayon (300) dans une orientation annulaire radialement vers l'extérieur ;
la mise en place d'une bande annulaire externe (400) de manière concentrique sur les extrémités radialement externes des rayons (300) ;
**caractérisé en ce que** le procédé comprend en outre :
le collage des rayons (300) à la bande annulaire externe (400) ;
la contraction de l'au moins un support de rayon (601) radialement vers l'intérieur ; et
la séparation de l'au moins un support de rayon (601) de la roue sans air (10).

2. Procédé selon la revendication 1, dans lequel après ladite mise en place de la bande annulaire externe (400) de manière concentrique sur les extrémités radialement externes des rayons (300), on dilate ledit au moins un support de rayon (601) radialement vers l'extérieur.

3. Procédé selon la revendication 1, comprenant en outre l'application d'une couche de collage (701) sur la surface radialement externe de chaque rayon (300).

4. Procédé selon la revendication 3, dans lequel la surface externe de couche de collage (701) est attachée en durcissant la couche de collage (701) à la bande annulaire externe (400) par l'application de pression et de chaleur.

5. Procédé selon la revendication 3, dans lequel la couche de collage externe (701) est un adhésif qui colle la surface radialement externe de chaque rayon (300) à la bande annulaire externe (400).

6. Procédé selon la revendication 1, dans lequel le collage des rayons (400) à la bande annulaire externe (400) comprend :
l'établissement de la bande annulaire externe (400) sur la surface radialement externe de chaque rayon (300) de la sous-structure de rayon ;
la mise en place de la bande annulaire externe (400) et de la sous-structure de rayon dans un moule (801) ;
le durcissement de la bande annulaire externe (400).

7. Procédé selon la revendication 5, dans lequel l'établissement de la bande annulaire externe (400) comprend la pose de couches de caoutchouc et de matériau de renforcement sur la surface radialement externe des rayons (300).

8. Procédé selon la revendication 1, dans lequel le durcissement se produit sous pression et chaleur.

9. Procédé selon la revendication 1, dans lequel le moule (801) imprime un motif de bande de roulement sur la surface radialement externe de la bande annulaire externe (400).

10. Procédé selon la revendication 1, dans lequel la pluralité de rayons (300) sont solidarisés au moyeu (100) par une liaison mécanique.

11. Procédé selon la revendication 1, dans lequel la pluralité de rayons (300) sont fixés au moyeu (100) par au moins un élément de retenue (200), dans lequel chaque élément de retenue (200) comprend une première surface de retenue (222) et une deuxième surface de retenue (224) et la partie radialement externe (210) de la première surface de retenue (222) possède un bord évasé de sorte que la partie radialement externe (210) de la première surface de retenue (222) s'incurve en s'éloignant de la partie radialement externe (210) de la deuxième surface de retenue (224) .

12. Procédé selon la revendication 11, dans lequel la partie radialement externe (210) de la deuxième surface de retenue (224) possède un bord évasé de sorte que la partie radialement externe (210) de la deuxième surface de retenue (224) s'incurve en s'éloignant de la partie radialement externe (210) de la première surface de retenue (222).

13. Procédé selon la revendication 1, dans lequel chaque support de rayon (601) est une saillie en forme de doigt.

14. Procédé selon la revendication 1, dans lequel chacun des un ou plusieurs supports de rayon (601) est positionné entre des rayons adjacents (300).

15. Roue sans air (10) construite conformément à la revendication 11 ou 12.
